# EUROPEAN PATENT APPLICATION

(11) **EP 4 821 704 A1**
(43) Date of publication of application: **14.10.2026**
(21) Application number: 24900185.0
(22) Date of filing: 24.06.2024
(51) Int. Cl.: B60C 9/20, B60C 9/18

(54) **HEAVY-DUTY TIRE**

(30) Priority: 05.12.2023 JP 2023205537
(71) Applicant: BRIDGESTONE CORPORATION, Chuo-ku Tokyo 104-8340 (JP)
(72) Inventor: MIYAZONO, Toshiya, Tokyo 104-8340 (JP)
(74) Representative: Marks & Clerk LLP
(86) International application number: PCT/JP2024/022899
(87) International publication number: WO 2025/120885

(57) **Abstract**

A heavy-duty tire including, in a tread portion, a belt composed of one or more belt layers and one or more belt reinforcement layers on a tire radial direction outer side of the belt. The belt reinforcement layer is formed by reinforcement cords coated with rubber. Each of the reinforcement cords extends from one end to the other end of the belt reinforcement layer and is cut at the one end and the other end. Each of the reinforcement cords is further divided at one or more positions between the one end and the other end. The cord density of the reinforcement cords is greater than the cord density of the belt cords of the belt.

## Description

### TECHNICAL FIELD

The present disclosure relates to a heavy-duty tire.

### BACKGROUND

In heavy-duty tires, a configuration is known in which a belt reinforcement layer is provided on the tire radial direction outer side of a belt layer having a hoop function, in order to protect the belt layer from obstacles such as fallen objects or stones on the road (for example, Patent Literature (PTL) 1).

### CITATION LIST

### Patent Literature

PTL 1: JP 2001-301418 A

### SUMMARY

### (Technical Problem)

However, even when a belt reinforcement layer is provided, there have been cases in which the belt reinforcement layer is ruptured by an obstacle, resulting in damage to the belt layer.

Therefore, an object of the present disclosure is to provide a heavy-duty tire capable of suppressing damage to the belt layer caused by obstacles on the road by imparting sufficient rupture strength to the belt reinforcement layer.

### (Solution to Problem)

The gist configuration of the present disclosure is as follows.
(1) A heavy-duty tire comprising, in a tread portion, a belt composed of one or more belt layers, and one or more belt reinforcement layers disposed on a tire radial direction outer side of the belt,
   wherein the belt reinforcement layer is formed by reinforcement cords coated with rubber,
   wherein each of the reinforcement cords extends from one end to the other end of the belt reinforcement layer and is cut at the one end and the other end,
   wherein each of the reinforcement cords is further divided at one or more positions between the one end and the other end,
   and wherein the cord density of the reinforcement cords is greater than the cord density of the belt cords of the belt.

### (Advantageous Effect)

According to the present disclosure, by imparting sufficient rupture strength to the belt reinforcement layer, it is possible to provide a heavy-duty tire capable of suppressing damage to the belt layer caused by obstacles on the road.

### BRIEF DESCRIPTION OF THE DRAWINGS

In the accompanying drawings:
FIG. 1 is a tire width direction cross-sectional view illustrating the tread portion of the tire;
FIG. 2 is a plan view of the belt reinforcement layer;
FIG. 3A is a diagram illustrating a state in which fibers are laid on a rubber block and a protrusion is pressed from above;
FIG. 3B is a diagram illustrating a state of deformation of the rubber block when fibers are laid on the rubber block and a protrusion is pressed from above;
FIG. 4 is a diagram presenting the relationship between fiber length and tensile force of the fiber directly below the protrusion in the cases of FIG. 3A and FIG. 3B;
FIG. 5 is a plan view of a first modified example of the belt reinforcement layer;
FIG. 6 is a plan view of a second modified example of the belt reinforcement layer;
FIG. 7 is a diagram presenting the results of the example; and
FIG. 8 is a diagram illustrating an example arrangement of a communication device.

Hereinafter, embodiments of the present disclosure will be illustrated and described in detail with reference to the drawings.

Hereinafter, unless otherwise specified, dimensions and positional relationships refer to the dimensions and positional relationships in a reference state in which a heavy-duty tire (hereinafter also simply referred to as "tire") is mounted on an applicable rim, filled with prescribed internal pressure, and is in an unloaded state.

In the present specification, "applicable rim" refers to a standard rim (referred to as "Measuring Rim" in the ETRTO STANDARDS MANUAL and "Design Rim" in the TRA YEAR BOOK) for the applicable size, as described or to be described in the future in industrial standards effective in the region where the tire is produced and used, such as the JATMA YEAR BOOK of JATMA (the Japan Automobile Tyre Manufacturers Association) in Japan, the STANDARDS MANUAL of ETRTO (The European Tyre and Rim Technical Organisation) in Europe, and the YEAR BOOK of TRA (The Tire and Rim Association, Inc.) in the United States (that is, the "rim" of the above "wheel" includes, in addition to current sizes, sizes that may be included in the above industrial standards in the future. As an example of "sizes to be described in the future," sizes described as "FUTURE DEVELOPMENTS" in the 2013 edition of ETRTO can be cited). However, in the case of sizes not described in the above industrial standards, it refers to a rim having a width corresponding to the bead width of the tire.

In addition, "prescribed internal pressure" refers to the air pressure (maximum air pressure) corresponding to the maximum load capability of a single tire for the applicable size and ply rating as described in the above JATMA and the like, and in the case of sizes not described in the above industrial standards, "prescribed internal pressure" refers to the air pressure (maximum air pressure) corresponding to the maximum load capability specified for each vehicle on which the tire is mounted.

Furthermore, the "maximum load" described later refers to the load corresponding to the above maximum load capability.

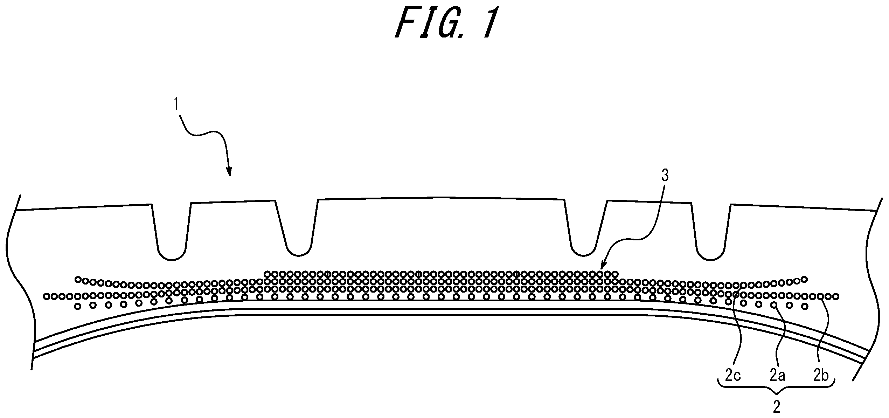

FIG. 1 is a cross-sectional view in the tire width direction illustrating the tread portion of the tire. This tire includes a pair of bead portions, a pair of sidewall portions continuous with the pair of bead portions, and a tread portion 1 continuous between the sidewall portions. Further, this tire further includes a carcass extending toroidally between the pair of bead portions. Since the configuration of the bead portions and carcass can be of a known structure, detailed description thereof is omitted.

As illustrated in FIG. 1, the tread portion 1 is provided with a belt 2 composed of one or more belt layers (in the illustrated example, three belt layers 2a, 2b, 2c), and one or more belt reinforcement layers 3 (in the illustrated example, one layer) disposed on the tire radial direction outer side of the belt 2.

Each of the belt layers 2a, 2b, and 2c is formed by belt cords coated with rubber. In this example, the belt layers 2a, 2b, and 2c are inclined belt layers in which the belt cords intersect each other between layers. Each belt cord, although not particularly limited, may be inclined at an inclination angle of, for example, 5° to 60° with respect to the tire circumferential direction. In the illustrated example, the belt layer 2b has the greatest width in the tire width direction. On the other hand, the belt layers may be one or more layers, and the number of belt layers and the width of the belt layers in the tire width direction may be various. The belt cords are not particularly limited, but steel cords may be used.

The belt reinforcement layer 3 is formed by reinforcement cords coated with rubber. Each of the reinforcement cords extends from one end to the other end of the belt reinforcement layer 3 and is cut at the one end and the other end. That is, the reinforcement cords extend inclined with respect to the tire circumferential direction. The inclination angle of the reinforcement cords with respect to the tire circumferential direction is not particularly limited, but may be, for example, 5° to 60°. The reinforcement cords are not particularly limited, but it is preferable to use cords made of a material having sufficient rupture strength, and, for example, steel cords or organic fibers such as nylon or aramid may be used.

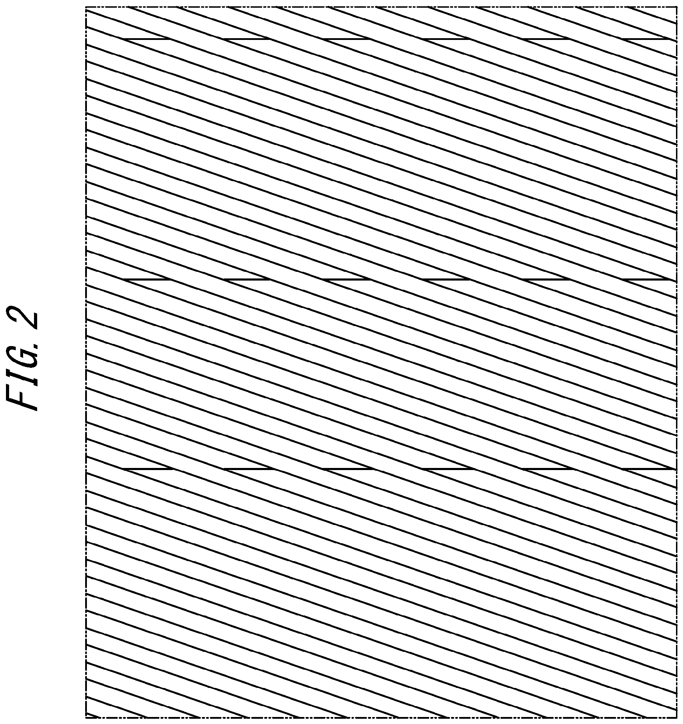

FIG. 2 is a plan view of the belt reinforcement layer. As illustrated in FIGS. 1 and 2, each of the reinforcement cords is further divided at one or more positions between one end and the other end (in FIG. 1, those indicated by circles are reinforcement cords at undivided positions, and those indicated by circles with vertical lines are reinforcement cords at divided positions). In this example, each of the divided reinforcement cords is in a state in which at least a portion of the divided surfaces are in contact with each other.

Here, the cord density of the reinforcement cords 3 is greater than the cord density of the belt cords of the belt 2.

Hereinafter, the effects of the heavy-duty tire of the present embodiment will be described.

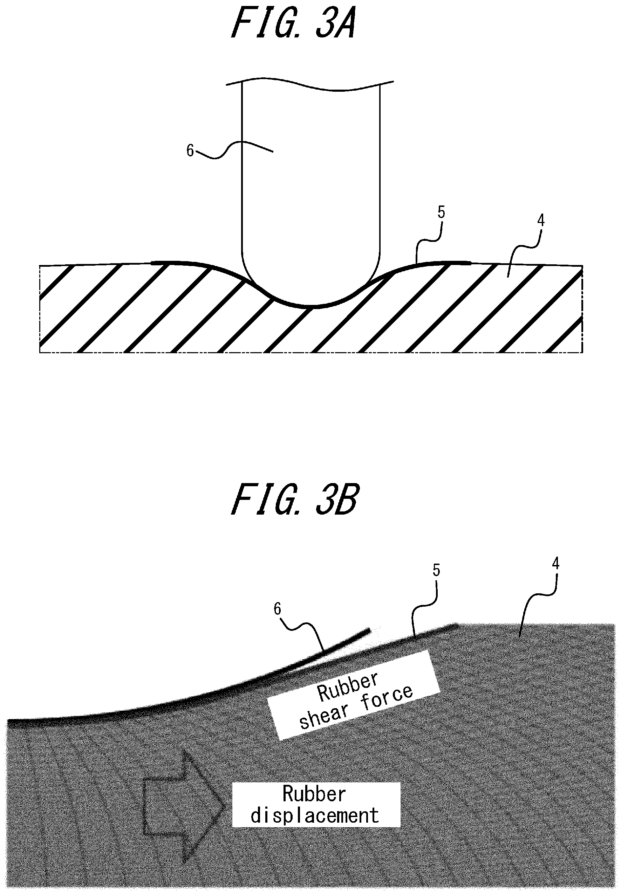

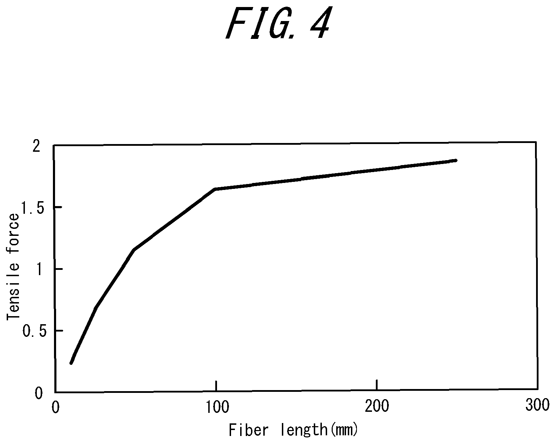

In the heavy-duty tire of the present embodiment, the belt reinforcement layer 3 is disposed on the tire radial direction outer side of the belt 2, and the belt reinforcement layer 3 serves a protective function for the belt 2. Here, FIG. 3A is a diagram illustrating a state in which a fiber 5 is laid on a rubber block 4 and a protrusion 6 is pressed from above. FIG. 3B is a diagram illustrating the deformation of the rubber block 4 when a fiber 5 is laid on the rubber block 4 and a protrusion 6 is pressed from above. Further, FIG. 4 is a diagram illustrating the relationship between the fiber length and the tensile force of the fiber directly below the protrusion at that time.

The tensile force generated in the reinforcement cord, which causes rupture of the reinforcement cord, is the sum of the shear forces of the rubber generated along the reinforcement cord (in FIG. 3B, the shear deformation is schematically indicated by small squares), and as illustrated in FIG. 4, when the fiber is shortened, the sum of the shear forces of the rubber generated along the fiber can be reduced. In the present embodiment, since each of the reinforcement cords is further divided at one or more positions between one end and the other end, the sum of the shear forces of the rubber generated along the reinforcement cord can be reduced, making it less likely for the reinforcement cord to rupture. As a result, the belt reinforcement layer 3 becomes less likely to rupture, so that the belt reinforcement layer 3 can sufficiently serve its protective function for the belt 2 (for example, from obstacles such as falling objects or stones). In addition, since the cord density of the reinforcement cords 3 is greater than the cord density of the belt cords of the belt 2, the protective function of the belt reinforcement layer 3 for the belt 2 can be made even more sufficient.

As described above, according to the heavy-duty tire of the present embodiment, by providing the belt reinforcement layer with sufficient rupture strength, it is possible to suppress damage to the belt layer caused by obstacles on the road.

Here, in a tire width direction cross-sectional view, it is preferable that, with respect to the cross-sectional area (the sum of the cross-sectional areas of the reinforcement cords and the coating rubber) of the belt reinforcement layer, the total sum of the cross-sectional areas of the plurality of reinforcement cords is equal to or greater than, with respect to the cross-sectional area (the sum of the cross-sectional areas of the belt cords and the coating rubber) of the outermost belt layer (in the illustrated example, belt layer 2c) in the tire radial direction among the one or more belt layers, the total sum of the cross-sectional areas of the plurality of belt cords of the outermost belt layer. This is because the belt reinforcement layer 3 can be provided with an even more sufficient protective function for the belt 2.

Each of the divided reinforcement cords preferably has a width in the tire width direction of 6.25% to 50% of the width in the tire width direction of the belt reinforcement layer 3. By setting it to 50% or less, the effect of improving the rupture strength of the reinforcement cords can be made even more sufficient, while by setting it to 6.25% or more, it is possible to suppress the reinforcement cords from being too short, which would otherwise result in the reinforcement cords being pulled out and unable to exhibit their protective function, and to suppress a decrease in productivity during manufacturing.

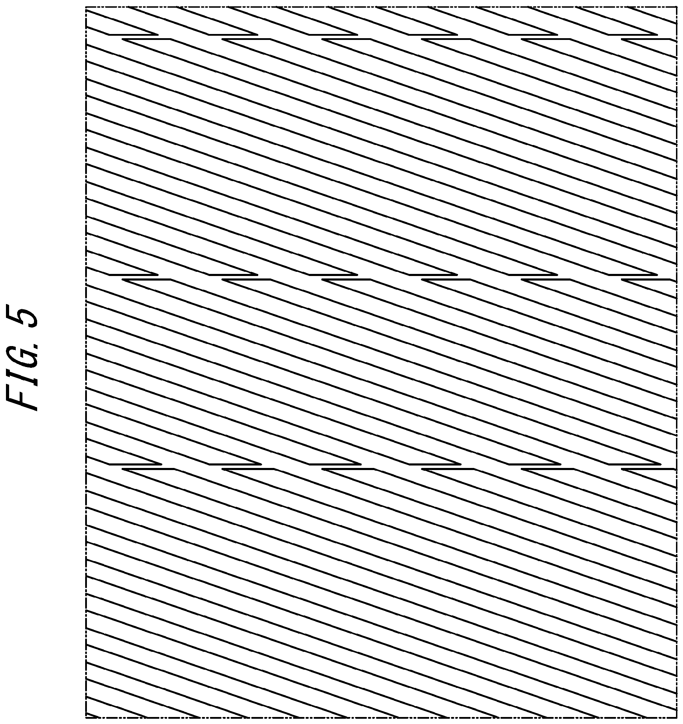

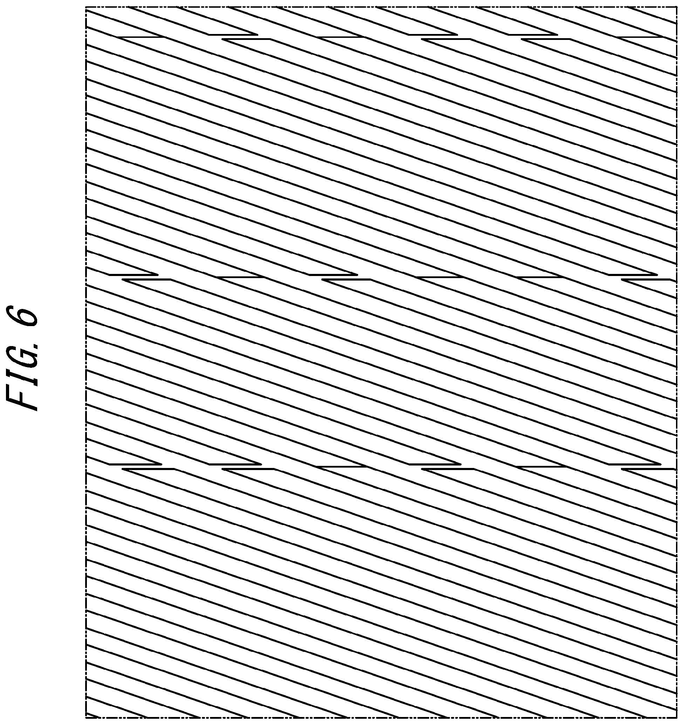

Each of the divided reinforcement cords is preferably in a state in which at least a portion of the divided surfaces are in contact with each other (in the example illustrated in FIG. 2, at least a portion (in the illustrated example, the entire surface) of the divided surfaces are in contact with each other at all divided surfaces). This is because it is possible to prevent obstacles from penetrating through gaps that occur when the cut ends are separated from each other. FIG. 5 is a plan view of a first modified example of the belt reinforcement layer. As illustrated in FIG. 5, each of the divided reinforcement cords may have the divided surfaces separated from each other. FIG. 6 is a plan view of a second modified example of the belt reinforcement layer. As illustrated in FIG. 6, the divided reinforcement cords may include both those in which at least a portion of the divided surfaces are in contact with each other and those in which the divided surfaces are separated from each other. Note that the state in which at least a portion of the divided surfaces are in contact with each other includes cases where they are in contact with each other by overlapping in the radial direction or by overlapping in the circumferential direction.

Here, the width in the tire width direction of the belt reinforcement layer 3 is preferably 30% or more of the tread width. Further, the end of the belt reinforcement layer 3 is preferably positioned on the inner side in the tire width direction relative to the tread edge. By setting the width in the tire width direction of the belt reinforcement layer 3 to 30% or more of the tread width, the width direction range in which the belt reinforcement layer protects the belt can be widened, thereby enhancing the protective function. In addition, by positioning the end of the belt reinforcement layer 3 on the inner side in the tire width direction relative to the tread edge, it is possible to suppress an increase in the weight of the belt reinforcement layer (and consequently the weight of the tire). Here, the "tread edge" refers to both ends in the tire width direction of the tread surface of the tread portion that comes into contact with the road surface when the tire is mounted on the applicable rim, filled with prescribed internal pressure, and loaded with the maximum load. The "tread width" refers to the tire width direction distance between both tread edges in the unloaded state.

Further, the divided positions of each reinforcement cord are preferably offset in the tire width direction from the circumferential main grooves. This is because it is possible to suppress the position of the cut ends from moving due to pressure applied to the reinforcement cords by the mold portions that form the grooves during vulcanization molding of the raw tire, thereby allowing the protective function for the belt to be exhibited more reliably. As a method for dividing the reinforcement cords, although not particularly limited, as one example, the belt before vulcanization molding of the tire may be made into a plurality of narrow widths.

### [Example of Arrangement of Communication Device]

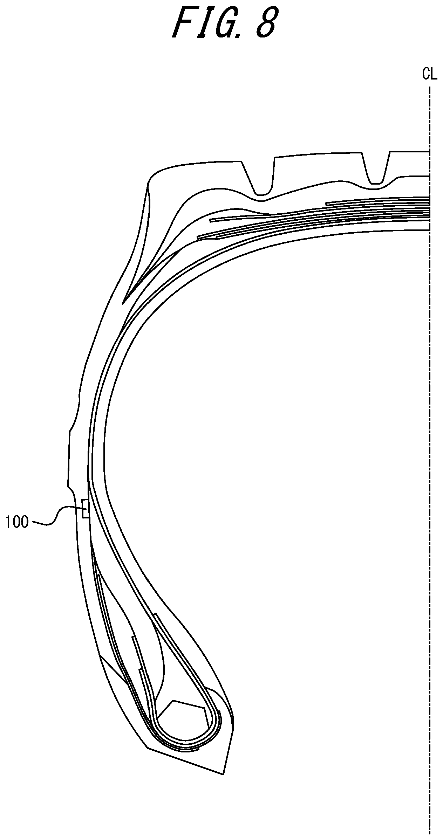

FIG. 8 is a diagram illustrating an example of arrangement of a communication device. The tire may be provided with an RF tag as the communication device 100. The RF tag includes an IC chip and an antenna. The RF tag may, for example, be disposed sandwiched between positions among a plurality of same or different members constituting the tire. By doing so, it is easy to attach the RF tag during tire production, and the productivity of tires provided with the RF tag can be improved. In this example, the RF tag may, for example, be disposed sandwiched between the bead filler and another member adjacent to the bead filler. The RF tag may also be embedded within any member constituting the tire. By doing so, compared to the case where it is disposed sandwiched between a plurality of members constituting the tire, the load applied to the RF tag can be reduced. As a result, the durability of the RF tag can be improved. In this example, the RF tag may, for example, be embedded within a rubber member such as tread rubber or side rubber. It is preferable that the RF tag is not disposed at a position that becomes a boundary between members having different rigidity in the peripheral length direction, which is the direction along the tire outer surface in a tire width direction cross-sectional view. By doing so, the RF tag is not disposed at a position where strain is likely to concentrate due to a rigidity step. Therefore, the load applied to the RF tag can be reduced. As a result, the durability of the RF tag can be improved. In this example, it is preferable that the RF tag is not disposed at a position that becomes a boundary between the end portion of the carcass in a tire width direction cross-sectional view and a member (such as side rubber) adjacent to the end portion of the carcass. The number of RF tags is not particularly limited. The tire may be provided with only one RF tag, or may be provided with two or more RF tags. Here, as an example of the communication device, an RF tag is illustrated and described, but a communication device different from an RF tag may also be used.

The RF tag may, for example, be disposed in the tread portion of the tire. By doing so, the RF tag is not damaged by side cuts of the tire. The RF tag may, for example, be disposed in the tread central portion in the tire width direction. The tread central portion is a position in the tread portion where flexing is less likely to concentrate. By doing so, the load applied to the RF tag can be reduced. As a result, the durability of the RF tag can be improved. In addition, it is possible to suppress a difference in communication performance with the RF tag from both outer sides of the tire in the tire width direction. In this example, the RF tag may, for example, be disposed within a range of 1/2 of the tread width centered on the tire equatorial plane in the tire width direction. The RF tag may, for example, be disposed at the tread edge in the tire width direction. When the position of the reader communicating with the RF tag is predetermined, the RF tag may, for example, be disposed at the tread edge on one side closer to the reader. In this example, the RF tag may, for example, be disposed within a range of 1/4 of the tread width with the tread edge as the outer end in the tire width direction.

The RF tag may, for example, be disposed on the tire inner cavity side relative to the carcass including one or more carcass plies spanning between the bead portions. By doing so, the RF tag becomes less likely to be damaged by external impacts, side cuts, or nail punctures. As one example, the RF tag may be disposed in close contact with the surface of the carcass on the tire inner cavity side. As another example, when another member is present on the tire inner cavity side relative to the carcass, the RF tag may, for example, be disposed between the carcass and another member located on the tire inner cavity side relative to the carcass. As another member located on the tire inner cavity side relative to the carcass, for example, an inner liner forming the inner surface of the tire can be cited. As another example, the RF tag may be attached to the tire inner surface facing the tire inner cavity. By configuring the RF tag to be attached to the tire inner surface, attachment of the RF tag to the tire and inspection or replacement of the RF tag can be easily performed. That is, the attachability and maintainability of the RF tag can be improved. In addition, by attaching the RF tag to the tire inner surface, compared to a configuration in which the RF tag is embedded in the tire, it is possible to prevent the RF tag from becoming a nucleus of tire failure. Further, when the carcass includes a plurality of carcass plies and there is a position where the plurality of carcass plies are stacked, the RF tag may be disposed between the stacked carcass plies.

The RF tag may, for example, be disposed on the tire radial direction outer side relative to the belt including one or more belt plies in the tread portion of the tire. As one example, the RF tag may be disposed in close contact with the belt on the tire radial direction outer side relative to the belt. Further, it may be disposed in close contact with the belt reinforcement layer on the tire radial direction outer side relative to the belt reinforcement layer. As another example, the RF tag may be embedded within the tread rubber on the tire radial direction outer side relative to the belt reinforcement layer. By disposing the RF tag on the tire radial direction outer side relative to the belt in the tread portion of the tire, communication with the RF tag from the outside of the tire in the tire radial direction is less likely to be hindered by the belt. Therefore, communication performance with the RF tag from the outside of the tire in the tire radial direction can be improved. In addition, the RF tag may, for example, be disposed on the tire radial direction inner side relative to the belt in the tread portion of the tire. By doing so, the RF tag is covered by the belt on the tire radial direction outer side, so the RF tag becomes less likely to be damaged by impacts or nail punctures from the tread surface. As one example, the RF tag may be disposed between the belt and the carcass located on the tire radial direction inner side relative to the belt in the tread portion of the tire. Further, when the belt includes a plurality of belt plies, the RF tag may be disposed between any two belt plies in the tread portion of the tire. By doing so, the RF tag is covered by one or more belt plies on the tire radial direction outer side, so the RF tag becomes less likely to be damaged by impacts or nail punctures from the tread surface.

The RF tag may, for example, be disposed sandwiched between the cushion rubber and the tread rubber, or between the cushion rubber and the side rubber. By doing so, impacts on the RF tag can be mitigated by the cushion rubber. Therefore, the durability of the RF tag can be improved. In addition, the RF tag may, for example, be embedded within the cushion rubber. Furthermore, the cushion rubber may be composed of a plurality of adjacent same or different rubber members. In such a case, the RF tag may be disposed sandwiched between the plurality of rubber members constituting the cushion rubber.

The RF tag may, for example, be disposed at a position of the sidewall portion or the bead portion of the tire. The RF tag may, for example, be disposed at the sidewall portion or the bead portion on one side that is closer to a reader capable of communicating with the RF tag. By doing so, communication between the RF tag and the reader can be enhanced. As one example, the RF tag may be disposed between the carcass and the side rubber, or between the tread rubber and the side rubber. The RF tag may, for example, be disposed, in the tire radial direction, between the position of the tire maximum width and the position of the tread surface. By doing so, as compared to a configuration in which the RF tag is disposed on the inner side in the tire radial direction relative to the position of the tire maximum width, communication with the RF tag from the outside in the tire radial direction of the tire can be enhanced. The RF tag may, for example, be disposed on the inner side in the tire radial direction relative to the position of the tire maximum width. By doing so, the RF tag is disposed in the vicinity of the bead portion, which has high rigidity. Therefore, the load applied to the RF tag can be reduced. As a result, the durability of the RF tag can be improved. As one example, the RF tag may be disposed at a position adjacent to the bead core in the tire radial direction or the tire width direction. The vicinity of the bead core is less likely to concentrate strain. Therefore, the load applied to the RF tag can be reduced. As a result, the durability of the RF tag can be improved. In particular, it is preferable that the RF tag be disposed on the inner side in the tire radial direction relative to the position of the tire maximum width and on the outer side in the tire radial direction relative to the bead core of the bead portion. By doing so, the durability of the RF tag can be improved, and communication between the RF tag and the reader is less likely to be hindered by the bead core, thereby enhancing the communication performance of the RF tag. Further, when the side rubber is composed of a plurality of rubber members of the same or different types that are adjacent in the tire radial direction, the RF tag may be disposed sandwiched between the plurality of rubber members constituting the side rubber. The RF tag may be disposed sandwiched between the stiffener and a member adjacent to the stiffener. By doing so, the RF tag can be disposed at a position where strain is less likely to concentrate due to the arrangement of the stiffener. Therefore, the load applied to the RF tag can be reduced. As a result, the durability of the RF tag can be improved. The RF tag may, for example, be disposed sandwiched between the stiffener and the side rubber.

Further, the RF tag may, for example, be disposed sandwiched between the stiffener and the carcass. The portion of the carcass that sandwiches the RF tag together with the stiffener may be located on the outer side in the tire width direction relative to the stiffener, or may be located on the inner side in the tire width direction. When the portion of the carcass that sandwiches the RF tag together with the stiffener is located on the outer side in the tire width direction relative to the stiffener, the load applied to the RF tag due to impact or damage from the outside in the tire width direction can be further reduced. As a result, the durability of the RF tag can be further improved. The stiffener may include a portion disposed adjacent to the rubber chafer. In such a case, the RF tag may be disposed sandwiched between the stiffener and the rubber chafer. The stiffener may include a portion adjacent to the hat rubber on the outer side in the tire width direction. In such a case, the RF tag may be disposed sandwiched between the stiffener and the hat rubber. The stiffener may be composed of a plurality of rubber members having different hardnesses. In such a case, the RF tag may be disposed sandwiched between the plurality of rubber members constituting the stiffener. The RF tag may be disposed sandwiched between the hat rubber and a member adjacent to the hat rubber. The RF tag may, for example, be disposed sandwiched between the hat rubber and the carcass ply. By doing so, impact on the RF tag can be mitigated by the hat rubber. Therefore, the durability of the RF tag can be improved.

The RF tag may, for example, be disposed sandwiched between the rubber chafer and the side rubber. By doing so, the RF tag can be disposed at a position where strain is less likely to concentrate due to the arrangement of the rubber chafer. Therefore, the load applied to the RF tag can be reduced. As a result, the durability of the RF tag can be improved. The RF tag may, for example, be disposed sandwiched between the rubber chafer and the carcass. By doing so, the load applied to the RF tag due to impact or damage from the rim can be reduced. Therefore, the durability of the RF tag can be improved.

The RF tag may be disposed sandwiched between the nylon chafer and another member adjacent to the nylon chafer on the outer side or inner side in the tire width direction. By doing so, the position of the RF tag becomes less likely to fluctuate during tire deformation. Therefore, the load applied to the RF tag during tire deformation can be reduced. As a result, the durability of the RF tag can be improved. The nylon chafer may, for example, include a portion adjacent to the rubber chafer on the outer side in the tire width direction. In such a case, the RF tag may be disposed sandwiched between the nylon chafer and the rubber chafer. The nylon chafer may, for example, include a portion adjacent to the side rubber on the outer side in the tire width direction. In such a case, the RF tag may be disposed sandwiched between the nylon chafer and the side rubber. The nylon chafer may, for example, include a portion adjacent to the stiffener on the inner side in the tire width direction. In such a case, the RF tag may be disposed sandwiched between the nylon chafer and the stiffener. Further, the nylon chafer may, for example, include a portion adjacent to the hat rubber on the inner side in the tire width direction. In such a case, the RF tag may be disposed sandwiched between the nylon chafer and the hat rubber. Furthermore, the nylon chafer may, for example, include a portion adjacent to the carcass on the inner side in the tire width direction. In such a case, the RF tag may be disposed sandwiched between the nylon chafer and the carcass. Furthermore, the nylon chafer may, for example, include a portion adjacent to the wire chafer on the inner side in the tire width direction. In such a case, the RF tag may be disposed sandwiched between the nylon chafer and the wire chafer. As described above, the RF tag may be disposed sandwiched between the nylon chafer and another member adjacent to the nylon chafer on the outer side or inner side in the tire width direction. In particular, by having the outer side in the tire width direction of the RF tag covered by the nylon chafer, the load applied to the RF tag due to impact or damage from the outside in the tire width direction of the tire can be further reduced. Therefore, the durability of the RF tag can be further improved.

The RF tag may be disposed sandwiched between the wire chafer and another member adjacent to the wire chafer on the inner side or outer side in the tire width direction. By doing so, the position of the RF tag becomes less likely to fluctuate during tire deformation. Therefore, the load applied to the RF tag during tire deformation can be reduced. As a result, the durability of the RF tag can be improved. The other member adjacent to the wire chafer on the inner side or outer side in the tire width direction may, for example, be a rubber member such as a rubber chafer. Further, the other member adjacent to the wire chafer on the inner side or outer side in the tire width direction may, for example, be the carcass.

### EXAMPLES

### (Example 1)

A simulation is conducted using a rubber piece in which cords are laid, in order to simulate the behavior of tire rupture due to a protruding object. The size of the rubber piece is kept constant, and the fiber length (and thus the number of divisions and cord length) is variously changed. The tensile force applied to the cord up to a certain displacement at which the protrusion is pressed (the smaller the value, the smaller the tensile force, that is, the shorter the cord, the smaller the tensile force when the same displacement is applied, making rupture less likely and thus superior as a protective layer) is depicted in FIG. 4.

### (Example 2)

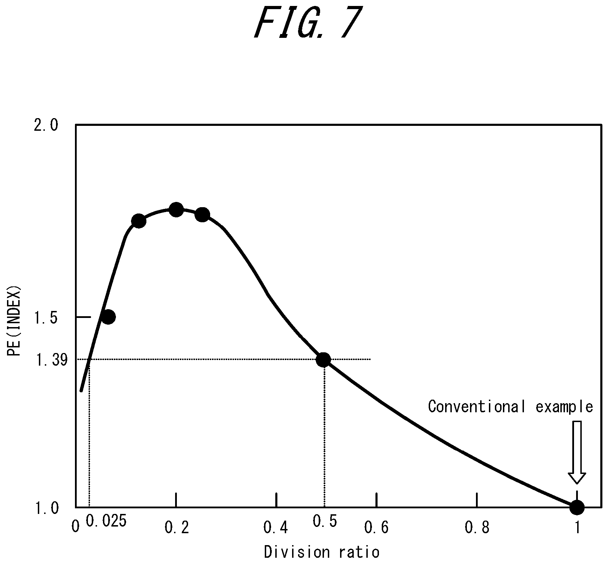

A truck/bus tire of tire size 275/80R22.5 is mounted on a rim of rim size 22.5×8.25J, and an internal pressure of 900 kPa is filled, while variously changing the ratio of the division width to the width in the tire width direction of the belt reinforcement layer (conventional example and four others). Then, using a blade with a blade length of 46 mm and a blade tip angle of 60°, with the blade length oriented in the rotation axis direction, the blade is pressed in the tire radial direction until the tire ruptures. The evaluation results of the tire rupture energy (expressed as an index with the conventional example set to 1.00, where a larger value indicates greater tire rupture energy) are presented in Table 1 and FIG. 7. Here, the tire rupture energy is a value approximated by the product of the load at rupture, the displacement amount in the radial direction from the position where the blade contacts the tire to the position where rupture occurs, and 1/2.

**[Table 1]**

| | Number of divisions | Cord length (mm) | Tire rupture energy (index) |
|---|---|---|---|
| Conventional Example | 0 | 307 | 1.00 |
| Comparative Example 1 | 2 | 154 | 1.39 |
| Comparative Example 2 | 4 | 77 | 1.76 |
| Comparative Example 3 | 8 | 39 | 1.75 |
| Comparative Example 4 | 16 | 19 | 1.50 |

As indicated in Table 1, in Comparative Examples 1 to 4, the tire rupture energy is greater in all cases compared to the Conventional Example.

As demonstrated in FIG. 7, it is understood that, due to the belt reinforcement layer being divided at one or more locations, a greater tire rupture energy is required compared to the Conventional Example.

The heavy-duty tire of the present disclosure is particularly suitable for truck and bus tires. Alternatively, it can also be used for ultra-large tires such as those for construction vehicles.

### REFERENCE SIGNS LIST

1: tread portion,
2: belt,
3: belt reinforcement layer,
4: rubber block,
5: fiber,
6: protrusion

## Claims

1. A heavy-duty tire comprising: in a tread portion, a belt composed of one or more belt layers, and one or more belt reinforcement layers disposed on a tire radial direction outer side of the belt,
wherein the belt reinforcement layer is formed by reinforcement cords coated with rubber,
wherein each of the reinforcement cords extends from one end to the other end of the belt reinforcement layer and is cut at the one end and the other end,
wherein each of the reinforcement cords is further divided at one or more positions between the one end and the other end,
and wherein the cord density of the reinforcement cords is greater than the cord density of the belt cords of the belt.

2. The heavy-duty tire according to claim 1, wherein, in a tire width direction cross-sectional view,
with respect to a cross-sectional area of the one or more belt reinforcement layers, a total sum of cross-sectional areas of the reinforcement cords is equal to or greater than, with respect to a cross-sectional area of the outermost belt layer in the tire radial direction among the one or more belt layers, a total sum of cross-sectional areas of the belt cords of the outermost belt layer.

3. The heavy-duty tire according to claim 1 or 2, wherein each of the divided reinforcement cords has a width in the tire width direction of 6.25% to 50% of a width in the tire width direction of the belt reinforcement layer.

4. The heavy-duty tire according to any one of claims 1 to 3, wherein each of the divided reinforcement cords is in a state in which at least a portion of the divided surfaces are in contact with each other.
